Europäisches Patentamt

European Patent Office

Office européen des brevets

(19)

(11) Publication number: **0 133 525**

**A2**

(12) **EUROPEAN PATENT APPLICATION**

(21) Application number: **84108998.0**

(22) Date of filing: **30.07.84**

(51) Int. Cl.⁴: **A 01 C 15/04**

(30) Priority: **29.07.83 IT 351483**

(43) Date of publication of application:
**27.02.85 Bulletin 85/9**

(84) Designated Contracting States:
**AT BE CH DE FR GB LI LU NL SE**

(71) Applicant: **Benito, Brunello**
**Via del Corso 4**
**I-40051 Altedo di Malalbergo Bologna(IT)**

(72) Inventor: **Benito, Brunello**
**Via del Corso 4**
**I-40051 Altedo di Malalbergo Bologna(IT)**

(74) Representative: **Sassatelli, Franco**
**INIP via Ruggi 5**
**I-40137 Bologna(IT)**

(54) **Turbo distributor for granulated products for fertilization and seeding.**

(57) Fitted on the tractor, the device automatically performs the distribution of granulated products on the ground for fertilization and seeding according to two subsequent impulses of aerodynamic thrust the first of which projects the product outwards and the subsequent one increases its falling space.

The initial impulse is given to the product in free fall, on the sill of a supply duct turned upwards, by an air jet which makes use of a very small part of a winnowing fan power; the subsequent impulse by the remaining air jet coming out from a duct below the previous one and with an analogous direction. The invented device enables to increase the space of trow for the product fall in comparison with the present systems working with only a single air jet.

EP 0 133 525 A2

- 1 -

"Turbo distributor for granulated products for fertilization and seeding".

The invention refers to a device fitted on the tractor carrying out the turbo distribution of granulated products particularly for fertilization and seeding purposes. The particularity of the invention consists in the fact of operating according to two subsequent thrusting impulses on the product: the first one projects it outwards, while the subsequent impulse increases its falling space.

The use of turbo distributing devices for fertilizing is well known; they are fitted on the tractor and carry out the product distribution by fall through one or more air jets with only one thrust impulse. One of these devices uses a hopper for the product feeding with an underlying rotating disk fitted with four brackets limiting the projection to the zone behind the machine. Another device employs a winnowing fan with a battery of distributing points in parallel disposition, by means of which the product is thrusted outwards. Both these types of devices are operating with only one thrusting impulse and enable respectively a radius and a distribution falling space which do not exceed six metres. This requires to perform the distribution in the conventional lots of land passing on the cultivations.

The invented device permits to solve the problem and to considerably reduce the distribution times by using a turbo distributor enabling to increase in a large measure the present thrust limits of the devi ces now used, thus allowing to carry out the distribution of the pro ducts by letting the device to pass through the conventional net pas sages on the ground, such as offlet drains, ditch borders and paths.

The device can be fitted on the conventional tractors on three sup porting points and is inserted on its furrowed shaft. The system au tomatically carries out the distribution of granulated products on the ground, in particular for fertilization and seeding purposes ac cording to two subsequent aerodynamic thrusting impulses, the first of which projects them outwards and the subsequent one increases the falling space. The initial impulse is given to the product, in free descent, in a feeding duct coming from the hopper and activated by a stirrer, on the sill of an additional supplying duct, in an upwards slanting position, by an air jet which uses an extremely small part of a winnowing fan power. On the product moving outside in the air, the subsequent thrusting impulse then operates which is impressed by the fan jet and gets out from a duct below the previous one and with an analogous direction.

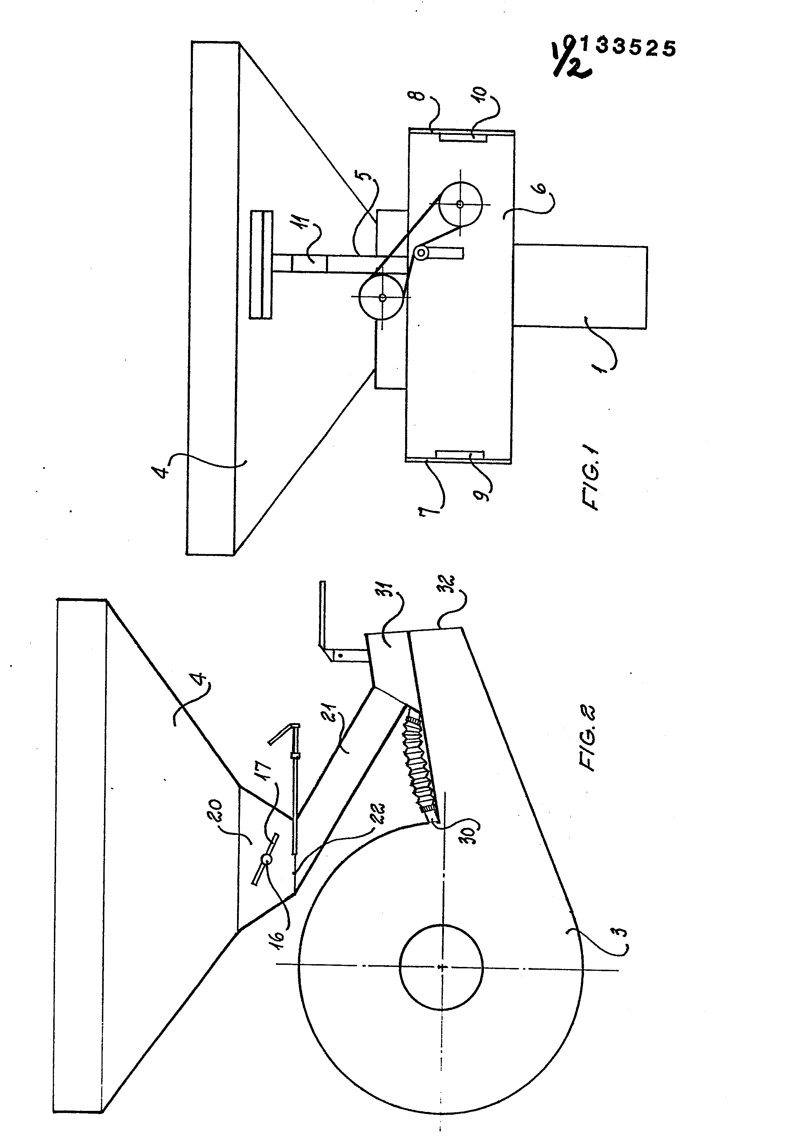

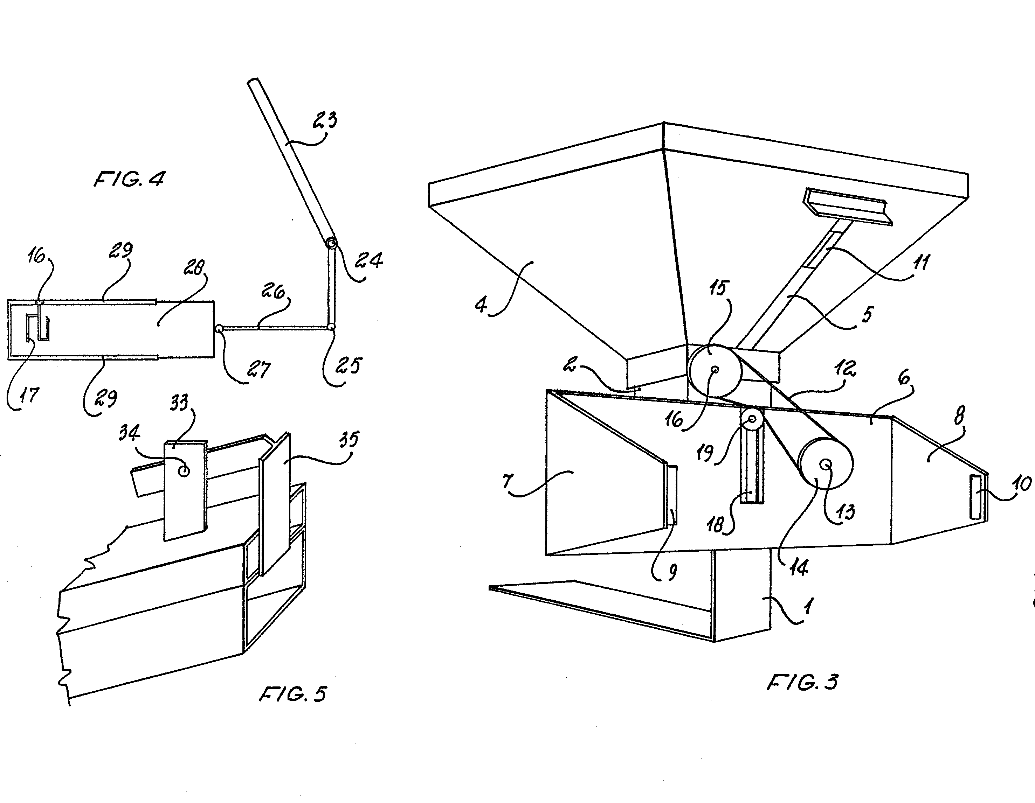

A form of execution is illustrated in a merely indicative way and, therefore, not limiting of the proceeding, by the drawings of Ta bles 1 and 2. Fig. 1 is the side view of the device from the side fixed ond the tractor. The hopper for the product loading can be noticed, as well as the three fixing parts and the transmission system equipped with belt stretcher and activated by the tractor power take-off for the stirrer operation. Fig. 2 is the section of the working assembly which carries out the product thrust and permits the additional thrusting impulse. Fig. 3 is the perspec tive view of the device. Fig. 4 is a view of the unloading opening on which the reduction equipment is operating. Fig. 5 is a perspec tive end particular of the supplying ducts for the product and the winnowing fan to show a regulation start device which can be used at the beginning of the operation and allowing the product to fall in a uniform way in the first length. After starting, the device is put in a non-empty condition.

For the working pre-setting, the device is fitted on three points on the tractor, the feeding opening is regulated, the belt stretcher is adjusted and the motor stared which sets the stirrer going. The regulator is then set in position on the delivery opening and the winnowing fan started. The device employs the bearing structure 1 of frame 2 which sustains the lower winnowing fan 3 and the above hopper 4 with the side supporting part 5. The mounting column of structure 1 bears the integral part of frame for stabilizing it to the tractor and consists of the flat vertical shape 6 with end brackets 7 and 8 sustaining the side parts 9 and 10 for the support to the tractor, while the third part 11 is borne by the slanting bar of structure 5. By means of the belt transmission 12, the movement is taken from the power take-off 13 of the tractor and is transmit ted from pulley 14 to the 15: this one fitted on shaft 16 starts the stirring device 17. The tension of the transmission belt 12 is adjusted on sledge 18 by shifting the small wheel 19. From hopper 4 the product sinks into chamber 20 where it is moved by the rotating stirrer 17 and passes into the feeding duct 21 through opening 22. The feeding opening 22 can be adjusted by means of the lever 23 pivoted in 24 which, on joint 25, longitudinally shifts the dragging rod 26 articulated in 27, letting frame 28 transferred on the the pair of guides 29. By means of duct 30, a grazing air jet reach es the sill of the feeding duct 31 employing an extremely small por tion of the winnowing fan 3 power and throws the product outwards. By means of the underlying opening 32, the remaining air jet of fan 3 gives the further shifting impulse to the product. As throw regulator in the startinh phase of the operation, a device is employed which, in the upper part, is integral with the product delivery duct which employs the fixed plate 33; on the latter, shape 35 can be moved by hand turning on pivot 34 which, in position, acts as a lid on the product small grains.

In practice, the particulars of execution, such as the frame devices, the hopper shape as well that the winnowing device and in relation, may be otherwise foreseen.

Claims.                                                    0133525

1) Turbo distributor for granulated products for fertilization and seeding, characterized by the fact that it can be fitted on the conventional tractors on three supporting points and is inserted on its furrowed shaft. The system automatically carries out the distribution of granulated products on the ground, in particular for fertilization and seeding purposes according to two sebsequent aerodynamic thrusting impulses, the first of which projects them outwards the subsequent one increases the falling space. The initial impulse is given to the product, in free descent, in a feeding duct coming from the hopper and activated by a stirrer, on the sill of an additional supllying duct, in an upwards slanting position, by an air jet which uses an extremely small part of a winnowing fan power. On the product moving outside in the air, the subsequent thrusting impulse then operates which is impressed by the fan jet and gets out from a duct below the previous one and with an analogous direction.

2) Turbo distributor for granulated products for fertilization and seeding, according to the previous claim, characterized by the fact that it is fitted on three points of the tractor, the feeding opening is regulated, the betl stretcher is adjusted an the motor started which sets the stirrer going. The regulator is then set in position on the delivery opening and the winnowing fan started.

3) Turbo distributor for granulated products for fertilization an seeding, according to the previous claims, characterized by the fact that it employs the bearing structure 1 of frame 2 which sustains the lower winnowing fan 3 and the above hopper 4 with the side supporting part 5. The mounting column of structure 1 bears the integral part of frame for stabilizing it to the tractor and consists of the flat vertical shape 6 with end brackets 7 and 8 sustaining the side part 9 and 10 for the support to the tractor, while the third part 11 is borne by the slanting bar of structure 5.

4) Turbo distributor for granulated products for fertilization and seeding, according to the previous claims, characterized by the fact that by means of the belt transmission 12, the movement is taken from the power take off 13 of the tractor and is transmitted from pulley 14 to the 15: this one fitted on shaft 16 starts the stirring device 17. The tension of the transmission belt 12 is adjusted on sledge 18 by shifting the small wheel 19.

5) Turbo distributor for granulated products for fertilization and seeding, according to the previous claims, characterized by the fact that from hopper 4 the product sinks into chamber 20 where it is moved by the rotating stirrer 17 and passes into the feeding duct 21 through opening 22.

6) Turbo distributor for granulated products for fertilization and seeding, according to the previous claims, characterized by the fact that the feeding opening 22 can be adjusted by means of the lever 23 pivoted in 24 which, on joint 25, longitudinally shifts the dragging rod 26 articulated in 27, letting frame 28 transferred on the pair of guides 29.

7) Turbo distributor for granulated products for fertilization and seeding, according to the previous claims, characterized by the fact that by means of duct 30, a grazing air jet reaches the sill of the feeding duct 31 employing an extremely small portion of the winnowing fan 3 power and throws the product outwards.

8) Turbo distributor for granulated products for fertilization and seeding, according to the previous claims, characterized by the fact that by means of the underlying opening 32, the remaining air jet of fan 3 gives the further shifting impulse to the product.

0133525

9) Turbo distributor for granulated products for fertilization and seeding, according to the previous claims, characterized by the fact that as throw regulator in the starting phase of the operation, a device is employed which, in the upper part, is integral with the product delivery duct which employs the fixed plaste 33: on the latter, shape 35 can be moved by hand turning on pivot 34, which, in position, acts as a lid on the product small grains.

FIG.1

FIG.2

FIG. 4

FIG. 5

FIG. 3

0133525